# EUROPÄISCHE PATENTSCHRIFT

(11) **EP 0 636 071 B1**
(45) Veröffentlichungstag und Bekanntmachung des Hinweises auf die Patenterteilung: **06.11.1996**
(21) Anmeldenummer: 93906608.0
(22) Anmeldetag: 24.03.1993
(51) Int. Cl.: B60R 11/02

(54) **Kommunikationseinrichtung für ein Fahrzeug**
Communication device for a Vehicle
Installation de communication pour un véhicule

(30) Priorität: 15.04.1992 DE 9205206 U
(43) Veröffentlichungstag der Anmeldung: 01.02.1995
(73) Patentinhaber: Kirmes, Karl-Heinz, D-01099 Dresden (DE); Meyer-Götz, Heinrich, D-01468 Reichenberg, Ortsteil Friedewald (DE)
(72) Erfinder: KIRMES, Karl-Heinz, D-01099 Dresden (DE); MEYER-GÖTZ, Heinrich, D-70193 Stuttgart 1 (DE); SCHILLER, Hartmuth, D-01237 Dresden (DE)
(74) Vertreter: Dreiss, Fuhlendorf & Steimle Patentanwälte
(86) Internationale Anmeldenummer: EP9300720
(87) Internationale Veröffentlichungsnummer: WO9321034

(56) Entgegenhaltungen:
- WO-A-90/05433
- DE-A- 2 020 411
- US-A- 3 043 912

## Beschreibung

Die Erfindung betrifft eine Kommunikationseinrichtung, insbesondere eine Wechselsprechanlage, für ein Fahrzeug mit einem ersten Mikrofon und einem ersten Lautsprecher, die sich im Fahrzeuginnenraum des Fahrzeugs befinden, und einem außenliegenden zweiten Mikrofon und zweiten Lautsprecher, einer elektronischen Schaltung, an die die Mikrofone und die Lautsprecher angeschlossen sind, sowie einer Schalteinrichtung für die Bedienung der Kommunikationseinrichtung.

Bei Schienenfahrzeugen, z.B. Straßenbahnen, S- oder U-Bahnen ist bekannt, daß bei Bedarf z.B. an Haltestellen von innerhalb des Fahrzeugs sich befindendem Bedienungspersonal Anweisungen bzw. Informationen an außerhalb des Fahrzeugs sich befindende Personen, z.B. an der Haltestelle wartende Fahrgäste usw. durchgegeben werden. Hierfür ist im Innenraum des Fahrzeugs und insbesondere im Bereich des Fahrzeuglenkers ein Mikrofon vorgesehen. Die von dem Mikrofon aufgenommen Schallwellen werden über eine elektronische Schaltung, z.B. einen Verstärker usw., an den außerhalb des Fahrzeugs sich befindenden Lautsprecher weitergegeben. Vor allem bei Schienenfahrzeugen haben sich derartige Einrichtungen bewährt, da die Bedienungsperson nunmehr nicht nur mit einzelnen Personen außerhalb des Fahrzeugs, sondern mit einer Vielzahl von Personen gleichzeitig kommunizieren kann. Als nachteilig hat sich jedoch herausgestellt, daß Informationen von außerhalb des Fahrzeugs zum Fahrzeugführer nicht übermittelt werden können. Hierfür ist es erforderlich, daß der Fahrzeugführer das Fahrzeug verläßt oder zumindest eine Scheibe öffnet, um den direkten Kontakt nach außen herzustellen. Dies ist bei winterlichen Temperaturen mitunter unangenehm.

Mit der US 3,043,912 ist eine Sprechanlage für Fahrzeuge gemäß der eingangs genannten Art und gemäß dem Obergriff des Anspruchs 1 bekannt geworden. Diese Sprechanlage erlaubt nicht nur eine Kommunikation vom Fahrzeuginnenraum nach außen, sondern auch von außen nach innen. Hierfür ist ein Umschalter vorgesehen, der jeweils für das Sprechen und das Hören in die andere Schaltstellung umgelegt werden muß.

Bei dieser Vorrichtung kann jedoch der Umschalter unbeabsichtigt in einer Schaltstellung vergessen werden, in der Gespräche vom Fahrzeuginnenraum nach außen übertragen werden können, was auch die Sicherheit der Fahrzeuginsassen gefährdet.

Mit der WO 90/05433 ist eine Wechsel-Sprechanlage für Kraftfahrzeuge bekannt geworden, die an der Oberseite eines Seitenfensters befestigbar ist. Dabei befindet sich ein Teil der Anlage auf der Innenseite und ein Teil der Anlage auf der Außenseite des Fensters. Zwar hat die Anlage einen Taster zum Aktivieren des im Fahrzeuginnenraums liegenden Mikrofons, jedoch ist die Anlage ohne Ein-Aus-Schalter ausgestattet. Dabei muß die außenstehende Person bei der Kommunikation sehr dicht an das Fenster herantreten, so daß die Gefahr besteht, daß sie die im Fahrzeug stattfindende Unterhaltung auch dann verstehen kann, wenn der Taster nicht gedrückt ist. Außerdem sind Sende- und Empfangsteil immer sehr dicht beieinander, so daß entweder der eine Teil, falls die Anlage auf der Beifahrerseite angebracht ist, ungünstig für den Fahrer liegt, oder der andere Teil, falls die Anlage auf der Fahrerseite angebracht ist, ungünstig für die außenstehende Person liegt.

Der Erfindung liegt daher die Aufgabe zugrunde, eine Kommunikationseinrichtung der eingangs genannten Art dahingehend weiterzubilden, daß sie den miteinander kommunizierenden Personen einen höheren Komfort bietet und insbesondere die Sicherheit der im Fahrzeug sich befindenden Personen erhöht.

Dies wird durch die Merkmale des Anspruchs 1 gelöst; die Schalteinrichtung weist einen Taster und einen Schalter zum Einschalten der Kommunikationseinrichtung auf, wobei beim Einschalten der Kommunikationseinrichtung eine Verbindung zwischen dem zweiten Mikrofon und dem ersten Lautsprecher hergestellt wird und wobei beim Betätigen des Tasters die Verbindung des zweiten Mikrofons mit dem ersten Lautsprecher unterbrochen wird und eine Verbindung zwischen dem ersten Mikrofon und dem zweiten Lautsprecher hergestellt wird, wobei diese Schaltstellung der elektronischen Schaltung nur solange beibehalten wird, solange der Taster betätigt wird.

Die erfindungsgemäße Kommunikationseinrichtung hat den Vorteil, daß sie bei Nichtgebrauch abschaltbar ist. Ferner ist nach dem Einschalten immer das äußere Mikrofon mit dem inneren Lautsprecher verbunden und es wird verhindert, daß Geräusche von innen nach außen gelangen. Erst durch bewußte Betätigung des Tasters wird die Einrichtung umgestellt, so daß die außen stehende Person den Fahrzeuginsassen verstehen kann. Ein versehentliches Einstellen dieser Schaltposition ist nicht möglich, da die Einrichtung sofort nach dem Loslassen des Tasters wieder in die Ausgangsstellung bzw. erste Betriebsstellung zurück umschaltet und die Verbindung des ersten Mikrofons mit dem zweiten Lautsprecher unterbricht.

Vorteilhaft befinden sich das erste Mikrofon und/oder der erste Lautsprecher im Bereich des Fahrersitzes, insbesondere im Bereich des Kopfes des Fahrers. Durch diese Maßnahme ist nicht nur ein störungsfreier Empfang mittels des Mikrofons und eine weitestgehende Ausschaltung von Nebengeräuschen möglich. Der in unmitelbarer Nähe des Kopfes des Fahrzeuglenkers sich befindende Lautsprecher kann nun auf einen relativ niederen Schallpegel eingestellt werden, was den Vorteil hat, daß der Fahrzeuglenker die vom Lautsprecher abgegebenen Signale zwar noch sehr gut verstehen kann, andere im Fahrzeuginnenraum sich befindende Personen jedoch nicht gestört werden.

Bei einer Ausführungsform sind das zweite Mikrofon und/oder der zweite Lautsprecher im vorderen Bereich des Fahrzeugs angeordnet. In der Regel hält sich die außerhalb des Fahrzeugs sich befindende Person im vorderen Bereich des Fahrzeugs auf, da dort ein Blickkontakt zum Fahrer hergestellt werden kann. Befinden sich nun das Mikrofon und der Lautsprecher ebenfalls in diesem Bereich, so ist eine problemlose Kommunikation zwischen den Personen im Inneren des Fahrzeugs und der außerhalb des Fahrzeugs sich befindenden Person möglich.

Vorteilhaft stellt die elektrische Schaltung in der ersten Betriebsstellung das zweite, äußere Mikrofon auf "EIN" und das erste, innere Mikrofon auf "AUS". Wird die Kommunikationseinrichtung eingeschaltet, so nimmt die elektrische Schaltung die erste Betriebsstellung ein und die Fahrzeuginsassen können nun Geräusche von außen einfangen. Auf diese Weise ist sichergestellt, daß ohne weiteres Dazutun Informationen von außen ins Wageninnere gelangen, die Fahrzeuginsassen jedoch davor geschützt sind, daß ihre Gespräche nach außen übertragen werden. Eine unbeabsichtigte Übermittlung eines Gesprächs aus dem Fahrzeuginnenraum nach außen ist deshalb ausgeschlossen.

Bevorzugt wird die erste Betriebsstellung durch eine erste Signallampe angezeigt. Ein Aufleuchten der Signallampe signalisiert den Fahrzeuginsassen, daß die Kommunikationseinrichtung eingeschaltet ist und daß das außerhalb des Fahrzeugs sich befindende Mikrofon aktiviert ist. Ein Abschalten der Kommunikationseinrichtung kann auf diese Weise mit großer Wahrscheinlichkeit nicht vergessen werden.

Durch Betätigen des Tasters ist die elektrische Schaltung in eine zweite Betriebsstellung umschaltbar, bei der das erste Mikrofon auf "EIN" und das zweite Mikrofon auf "AUS" stehen. Hierdurch wird sichergestellt, daß erst durch eine bewußte Betätigung des Tasters das innere Mikrofon aktiviert wird, so daß erst dann Gespräche aus dem Fahrzeuginnenraum nach außen übertragen werden können. Durch die Umschaltung der elektronischen Schaltung von der ersten in die zweite Betriebsstellung bzw. von der zweiten in die erste Betriebsstellung, wobei jeweils die entsprechenden Mikrofone aus- bzw. eingeschaltet werden, werden u.a. auch akustische Rückkopplungen vermieden.

Auch die zweite Betriebsstellung kann durch eine zweite Signallampe angezeigt werden. Diese Signallampe zeigt z.B. weiteren im Fahrzeuginnenraum sich befindenden Personen an, daß Gespräche aus dem Fahrzeuginnenraum nach außen übertragen werden. Sie bietet also eine Sicherheit gegen eine ungewollte Übermittlung vertraulicher Informationen.

Außerdem ist die Lautstärke der Lautsprecher einstellbar. So kann z.B. die Lautstärke des im Fahrzeuginneren vorgesehenen Lautsprechers dahingehend verändert werden, daß er auf eine einzige Person, z.B. den Fahrzeuglenker oder auf alle im Fahrzeuginnenraum sich befindenden Personen abgestimmt ist. Ebenso kann die Lautstärke des äußeren Lautsprechers z.B. in Abhängigkeit von den Außengeräuschen beliebig eingestellt werden.

Bei Bedarf ist an die erfindungsgemäße Kommunikationseinrichtung ein Aufzeichnungsgerät anschließbar.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im einzelnen dargestellt ist. Dabei zeigen:
- Figur 1: eine perspektivische Wiedergabe eines Fahrzeugs, welches mit einer Kommunikationseinrichtung ausgestattet ist; und
- Figur 2: eine schematische Prinzipskizze der Kommunikationseinrichtung.

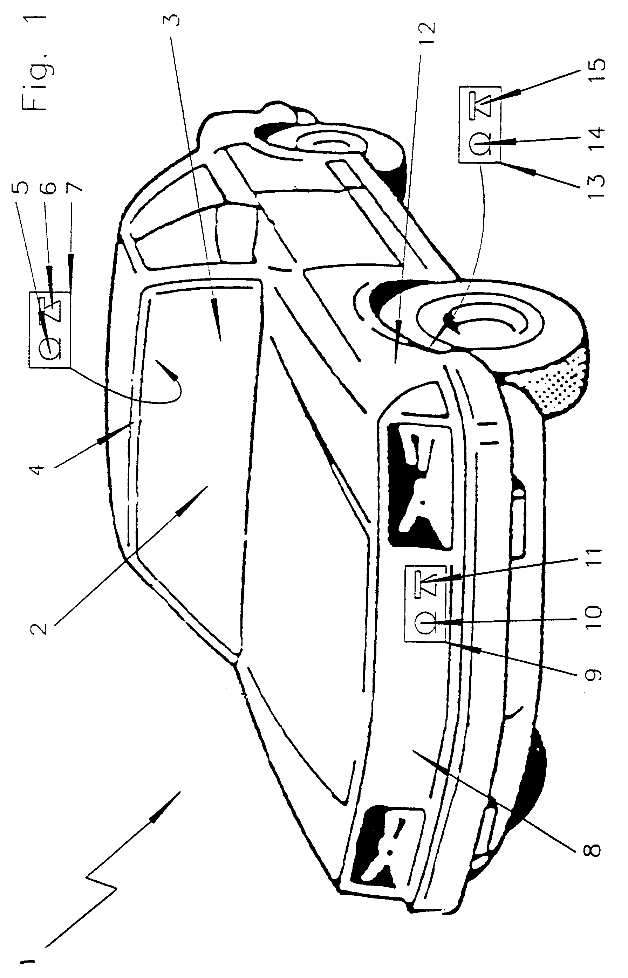

In Figur 1 ist insgesamt ein lediglich beispielhaft wiedergegebenes Fahrzeug 1 dargestellt, das mit der erfindungsgemäßen Kommunikationseinrichtung versehen ist. Wie beispielhaft dargestellt, befindet sich im Fahrzeuginnenraum 2 im Bereich des Fahrersitzes 3 am Fahrzeugdach 4 eine ein erstes Mikrofon 5 und einen ersten Lautsprecher 6 aufweisende erste Einheit 7, die als selbständiges Element handhabbar ist. Ferner befindet sich im Bereich des Kühlergrills 8 des Fahrzeugs 1 eine zweite Einheit 9, die ein zweites Mikrofon 10 und einen zweiten Lautsprecher 11 aufweist. Alternativ zu der zweiten Einheit 9 oder Zusätzlich zu dieser kann im Bereich eines vorderen Kotflügels 12 eine weitere, dritte Einheit 13 vorgesehen sein, die ebenfalls ein zweites Mikrofon 14 und einen zweiten Lautsprecher 15 beinhaltet. Über das erste Mikrofon 5 und die zweiten Lautsprecher 11 und 15 kann eine im Fahrzeuginnenraum 2 sich befindende Person mit außen stehenden Personen in Verbindung treten. Wiederum können die außen stehenden Personen über die zweiten Mikrofone 10 und 12 mit der im Fahrzeuginnenraum 2 sich befindenden Person kommunizieren, wobei von außen kommende Informationen über den ersten Lautsprecher 6 ins Fahrzeuginnere, und vom Fahrzeuginnenraum 2 kommende Gespräche über die zweiten Lautsprecher 11 und 15 nach außen übertragen werden.

Die zweite bzw. dritte Einheit 9 bzw. 13 ist in einem wetterfesten Gehäuse 23 untergebracht, so daß sie z.B. gegen Witterungseinflüsse, wie Spritzwasser, Tau, Frost usw., gegen Straßenschmutz, Salz, Schmier- und Treibstoffe hinreichend widerstandsfähig ist.

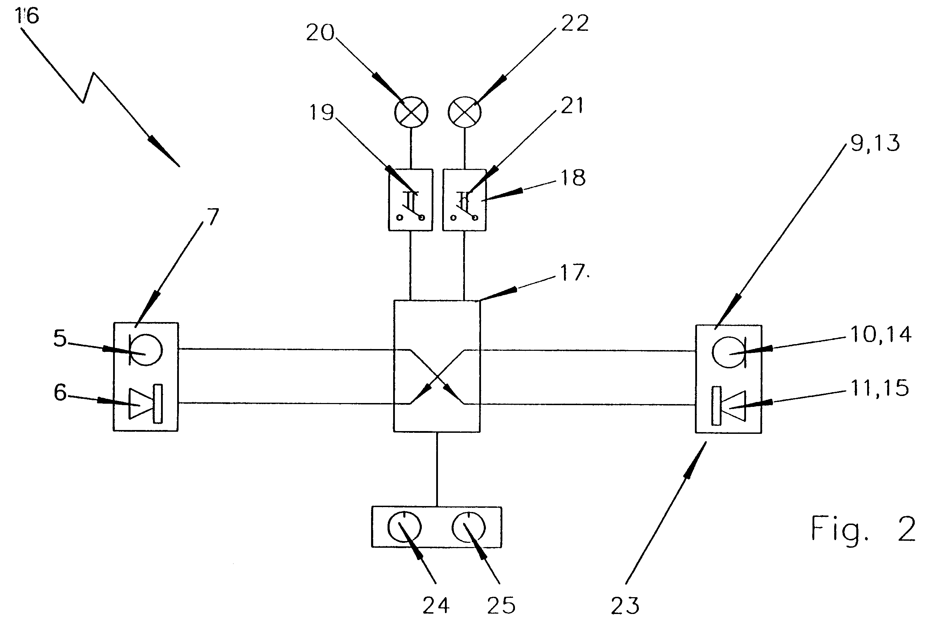

Die in der Figur 2 dargestellte Prinzipskizze veranschaulicht den Aufbau der insgesamt mit 16 bezeichneten Kommunikationseinrichtung, wobei die erste Einheit 7 mit der zweiten bzw. dritten Einheit 9 bzw. 13 über eine elektrische Schaltung 17 verbunden ist. An die elektrische Schaltung 17 ist außerdem eine insgesamt mit 18 bezeichnete Schalteinrichtung angeschlossen. Ferner sind Drehschalter 24 und 25 erkennbar, mit denen die Lautstärke der ersten und zweiten Lautsprecher 6 und 11 bzw. 15 eingestellt werden kann.

Nachfolgend wird die Funktionsweise der Kommunikationseinrichtung 16 beschrieben.

Nach dem Einschalten der Kommunikationseinrichtung 16 durch Betätigen eines Schalters 19 leuchtet eine Signallampe 20 auf und signalisiert dem bzw. den Fahrzeuginsassen, daß die Kommunikationseinrichtung 16 eingeschaltet ist. Außerdem wird durch die Betätigung des Schalters 19 eine Verbindung zwischen dem zweiten Mikrofon 10 bzw. 14 der außen liegenden zweiten bzw. dritten Einheit 9 bzw. 13 zum ersten Lautsprecher 6, der sich im Innenraum 2 des Fahrzeugs befindet, hergestellt. Die Fahrzeuginsassen können nun Geräusche von außen empfangen. Wird ein Taster 21 betätigt, so wird die Verbindung des zweiten Mikrofons 10 bzw. 14 mit dem ersten Lautsprecher 6 unterbrochen und es wird eine Verbindung zwischen dem ersten Mikrofon 5 und dem zweiten Lautsprecher 11 bzw. 15 hergestellt. Außerdem wird dieser Schaltungszustand den Fahrzeuginsassen durch eine Signallampe 22 angezeigt. In dieser zweiten Betriebsstellung werden Geräusche aus dem Fahrzeuginnenraum 2 nach außen übertragen. Wird der Taster 21 losgelassen, so kehrt die elektrische Schaltung 17 unverzüglich in die erste Betriebsstellung zurück, und unterbricht die Verbindung des ersten Mikrofons 5 mit dem zweiten Lautsprecher 11 bzw. 15. Gleichzeitig erlischt die Signallampe 22.

Mit einer derartigen Kommunikationseinrichtung 16 können im Fahrzeuginnenraum 2 sich befindende Personen mit außen stehenden Personen kommunizieren, ohne daß der Fahrzeuginnenraum 2 geöffnet werden muß. Neben einem erhöhten Komfort bietet die erfindungsgemäße Kommunikationseinrichtung 16 auch eine wesentlich höhere Sicherheit der Fahrzeuginsassen, da diese im Fahrzeuginnenraum 2 verbleiben können und durch das Fahrzeug 1 geschützt sind und keine Geräusche ungewollt von innen nach außen gelangen können.

## Patentansprüche

1. Kommunikationseinrichtung (16), insbesondere Wechselsprechanlage, für ein Fahrzeug (1) mit einem ersten Mikrofon (5) und einem ersten Lautsprecher (6), welche sich im Fahrzeuginnenraum (2) des Fahrzeugs (1) befinden, und einem außenliegenden zweiten Mikrofon (10 bzw. 14) und zweiten Lautsprecher (11 bzw. 15), einer elektronischen Schaltung (17), an die die Mikrofone (5, 10 bzw. 14) und die Lautsprecher (6, 11 bzw. 15) angeschlossen sind, sowie einer Schalteinrichtung (18) für die Bedienung der Kommunikationseinrichtung (16), **dadurch gekennzeichnet,** daß die Schalteinrichtung (18) einen Taster (21) und einen Schalter (19) zum Einschalten der Kommunikationseinrichtung (16) aufweist, daß die Schalteinrichtung (18) in einer ersten Betriebsstellung eine Verbindung Zwischen dem zweiten Mikrofon (10; 14) und dem ersten Lautsprecher (6) herstellt und das erste Mikrofon (5) ausschaltet, und in einer zweiten Betriebsstellung eine Verbindung zwischen dem ersten Mikrofon (5) und dem zweiten Lautsprecher (11 bzw. 15) herstellt und das zweite Mikrofon (10 bzw. 14) ausschaltet, wobei beim Einschalten der Kommunikationseinrichtung (16) die Schalteinrichtung (18) die erste Betriebsstellung einnimmt und wobei beim Betätigen des Tasters (21) die Schalteinrichtung (18) von der ersten in die zweite Betriebsstellung umgeschaltet wird, wobei diese Betriebsstellung der elektronischen Schalteinrichtung (18) nur solange beibehalten wird, solange der Taster (21) betätigt wird.

2. Kommunikationseinrichtung nach Anspruch 1, dadurch gekennzeichnet, daß das erste Mikrofon (5) und/oder der erste Lautsprecher (6) sich im Bereich des Fahrersitzes (3), insbesondere im Bereich des Kopfes des Fahrers befinden.

3. Kommunikationseinrichtung nach Anspruch 1 oder 2, dadurch gekennzeichnet, daß das zweite Mikrofon (10 bzw. 14) und der zweite Lautsprecher (11 bzw. 15) im vorderen Bereich des Fahrzeugs (1) insbesondere im Bereich des Kühlergrills (8) oder im Bereich eines vorderen Kotflügels (12) angeordnet sind.

4. Kommunikationseinrichtung nach einem der vorhergehnden Ansprüche, dadurch gekennzeichnet, daß das zweite Mikrofon (10 bzw. 14) und der zweite Lautsprecher (11 bzw. 15) zu einer Einheit (9 bzw. 13) zusammengefaßt sind, die insbesondere von einem Gehäuse (23) umgeben und gegen Witterungseinflüsse, Straßenschmutz und Schmier- und Treibstoffe geschützt sind.

5. Kommunikationseinrichtung nach einem der vorhergehenden Ansprüche, dadurch gekennzeichnet, daß die erste und/oder die zweite Betriebsstellung durch eine erste und/oder zweite Signallampe (20 bzw. 22) angezeigt werden.

6. Kommunikationseinrichtung nach einem der vorhergehenden Ansprüche, dadurch gekennzeichnet, daß die Lautstärke der Lautsprecher (6,11,15) einstellbar ist.

7. Kommunikationseinrichtung nach einem der vorhergehenden Ansprüche, dadurch gekennzeichnet, daß ein Aufzeichnungsgerät anschließbar ist.

8. Kommunikationseinrichtung nach einem der vorhergehenden Ansprüche, dadurch gekennzeichnet, daß das Mikrofon (10) und der Lautsprecher (11) in einem in der Regel auf dem Dach des Kraftfahrzeugs (1) angeordneten Taxi-Schild untergebracht sind.

9. Kommunikationseinrichtung nach einem der vorhergehenden Ansprüche, dadurch gekennzeichnet, daß der erste Lautsprecher (6) und das erste Mikrofon (5) in einer ersten, selbstständig handhabbaren Einheit (7) vorgesehen sind und/oder daß der zweite Lautsprecher (11 bzw. 15) und das zweite Mikrofon (10 bzw. 14) in einer zweiten Einheit (9 bzw. 13) vorgesehen sind.

## Claims

1. A communications device (16), in particular a two-way communication installation, for a vehicle (1), having a first microphone (5) and a first loudspeaker (6) located in the interior compartment (2) of the vehicle (1), and a second microphone (10 or 14) and second loudspeaker (11 or 15) located on the outside, an electronic circuit (17), with which the microphones (5, 10 or 14) and the loudspeakers (6, 11 or 15) are connected, and with a switchgear (18) for operating the communications device (16), characterized in that the switchgear (18) has a key (21) and a switch (19) for activating the communications device (16), that in a first operating position the switchgear (18) makes a connection between the second microphone (10; 14) and the first loudspeaker (6) and switches the first microphone (5) off, and in a second operating position makes a connection between the first microphone (5) and the second loudspeaker (11 or 15) and switches the second microphone (10 or 14) off, wherein the switchgear (18) takes up the first operating position when the communications device (16) is activated, and wherein the switchgear (18) is switched from the first into the second operating position when the key (21) is actuated, wherein this operating position of the electronic switchgear (18) is maintained only as long is the key (21) is actuated.

2. The communications device in accordance with claim 1, characterized in that the first microphone (5) and/or the first loudspeaker (6) ore located in the area of the driver's seat (3), in particular in the area of the head of the driver.

3. The communications device in accordance with claim 1 or 2, characterized in that the second microphone (10 or 14) and the second loudspeaker (11, 15) are arranged in the front part of the vehicle (1) or in the area of a front fender (12).

4. The communications device in accordance with one of the preceding claims, characterized in that the second microphone (10 or 14) and the second loudspeaker (11, 15) are combined into a unit (9 or 13), and are particularly enclosed in a housing (23) and protected against the effects of weather, road grime and lubricants and fuels.

5. The communications device in accordance with one of the preceding claims, characterized in that the first and/or second operating positions are indicated by a first and/or second signal lamp (20 or 22).

6. The communications device in accordance with one of the preceding claims, characterized in that the volume of the loudspeakers (6, 11, 15) can be adjusted.

7. The communications device in accordance with one of the preceding claims, characterized in that a recording device can be attached.

8. The communications device in accordance with one of the preceding claims, characterized in that the microphone (10) and the loudspeaker (11) are housed in a taxi sign which as a rule is arranged on the roof of the motor vehicle (1).

9. The communications device in accordance with one of the preceding claims, characterized in that the first loudspeaker (6) and the first microphone (5) are provided in a first unit (7), which can be individually manipulated, and/or that the second loudspeaker (11 or 15) and the second microphone (10 or 14) are provided in a second unit (9 or 13).

## Revendications

1. Dispositif de communication (16) concernant notamment un système d'intercommunication utilisé pour un véhicule (1), comprenant :
- un premier microphone (5) et un premier haut-parleur (6) qui se trouvent dans l'habitacle (2) du véhicule (1),
- un second microphone (10 ou 14) et un second haut-parleur (11 ou 15) placés à l'extérieur,
- un circuit électronique (17) auquel sont connectés les microphones (5, 10 ou 14) et les haut-parleurs (6, 11 ou 15),
- ainsi qu'un dispositif de commande (18) pour le fonctionnement du dispositif de communication (16),
**caractérisé**
- en ce que le dispositif de commande (18) se compose d'un bouton-poussoir (21) et d'un interrupteur (19) pour la mise en marche du dispositif de communication (16),
- en ce que le dispositif de commande (18), dans une première position de fonctionnement, établit une connexion entre le second microphone (10 ; 14) et le premier haut-parleur (6), et il coupe le premier microphone (5), et
- en ce que le dispositif de commande (18), dans une seconde position de fonctionnement, établit une connexion entre le premier microphone (5) et le second haut-parleur (11 ou 15), et il coupe le second microphone (10 ou 14), le dispositif de commande (18), au moment de la mise en marche du dispositif de communication (16), se place alors sur la première position de fonctionnement, et le dispositif de commande (18), lorsque l'on actionne le bouton-poussoir (21), passe alors de la première à la seconde position de fonctionnement, cette position de fonctionnement du dispositif de commande électronique (18) n'étant maintenue qu'aussi longtemps que l'on actionne la bouton-poussoir (21).

2. Dispositif de communication selon la revendication 1, caractérisé en ce que le premier microphone (5) et/ou le premier haut-parleur (6) se trouvent dans la zone du siège (3) du conducteur, notamment dans la zone près de la tête du conducteur.

3. Dispositif de communication selon la revendication 1 ou 2, caractérisé an ce que la second microphone (10 ou 14) et le second haut-parleur (11 ou 15) sont disposés dans la partie avant du véhicule (1), notamment dans la zone de la calandre de radiateur (8) ou dans la zone d'une aile avant (12).

4. Dispositif de communication selon l'une quelconque des revendications précédentes, caractérisé en ce que le second microphone (10 ou 14) et le second haut-parleur (11 ou 15) sont regroupés pour constituer un ensemble (9 ou 13), lesquels sont entourés notamment d'un boîtier (23) et sont protégés contre les intempéries, les salissures de la route, et contre les lubrifiants et les carburants.

5. Dispositif de communication selon l'une quelconque des revendications précédentes, caractérisé en ce que la première et/ou la seconde positions de fonctionnement sont indiquées par un premier et/ou un second voyants (20 ou 22).

6. Dispositif de communication selon l'une quelconque des revendications précédentes, caractérisé en ce que la puissance sonore des haut-parleurs (6, 11, 15) est réglable.

7. Dispositif de communication selon l'une quelconque des revendications précédentes, caractérisé en ce que l'on peut connecter un appareil enregistreur.

8. Dispositif de communication selon l'une quelconque des revendications précédentes, caractérisé en ce que le microphone (10) et le haut-parleur (11) sont disposés en règle générale dans une plaque de taxi montée sur le toit du véhicule (1).

9. Dispositif de communication selon l'une quelconque des revendications précédentes, caractérisé en ce que le premier haut-parleur (6) et le premier microphone (5) sont prévus dans un premier ensemble (7) utilisable de façon autonoms, et/ou en ce que le second haut-parleur (11 ou 15) et le second microphone (10 ou 14) sont prévus dans un second ensemble (9 ou 13).
